(19) Europäisches Patentamt

European Patent Office

Office européen des brevets

(11) EP 0 974 932 A2

(12) EUROPEAN PATENT APPLICATION

(43) Date of publication:
26.01.2000 Bulletin 2000/04

(51) Int. Cl.⁷: G06T 9/00

(21) Application number: 99304700.0

(22) Date of filing: 16.06.1999

(84) Designated Contracting States:
AT BE CH CY DE DK ES FI FR GB GR IE IT LI LU MC NL PT SE
Designated Extension States:
AL LT LV MK RO SI

(30) Priority: 21.07.1998 US 119860

(71) Applicant:
Hewlett-Packard Company
Palo Alto, California 94304 (US)

(72) Inventors:
• Memon, Nasir
De Kalb, Ilinois 60115 (US)
• Tretten, Daniel R.
No.18, Mountain View, California 94040 (US)

(74) Representative:
Powell, Stephen David et al
WILLIAMS, POWELL & ASSOCIATES
4 St Paul's Churchyard
London EC4M 8AY (GB)

(54) **ADAPTIVE VIDEO COMPRESSION**

(57) The fidelity of compressed images is improved by computing a scaling value for each block based on a perceptual classification performed in the spatial domain. This provides a computationally simple way to reduce artifacts by computing appropriate block-variable scale factors for the quantization tables used in frequency domain-based compression schemes such as the JPEG compression standard. Because a scale factor for a block is determined based on computations performed in the spatial domain, such computations can be made in parallel with the Discrete Cosine Transform (DCT) computation.

FIGURE 3

EP 0 974 932 A2

**Description**

The present invention relates to digital image processing and, more particularly to the variable quantization compression of images for improved perceptual quality.

One of the main limitations of frequency domain-based compression schemes, such as the ubiquitous JPEG standard, is the fact that visible artifacts can often appear in the decompressed image at moderate to high compression ratios. (See, e.g., G. K. Wallace. The JPEG still picture compression standard. *Communications of the ACM*, 34(4):31-44, 1991.) This is especially true for parts of the image containing graphics, text, or some other such synthesized component. Artifacts are also common in smooth regions and in image blocks containing a single dominant edge.

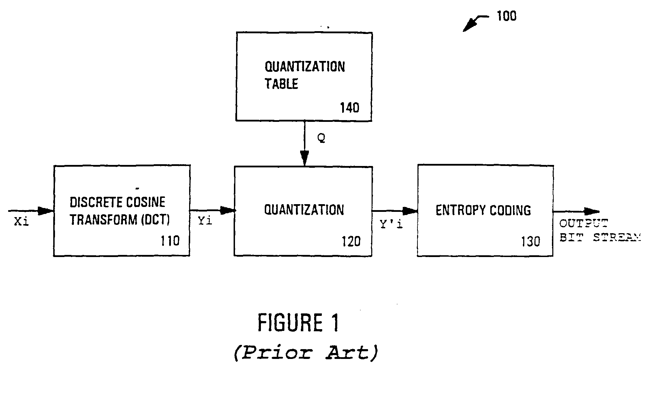

Figure 1 illustrates a flow diagram of the baseline JPEG encoder 100 for a given image block. The JPEG baseline encoder 100 partitions each color plane of the image into 8 x 8 blocks which are transformed into the frequency domain using the Discrete Cosine Transform (DCT) 110.

Let $X_i$ denote the *i'th* 8 x 8 block of the image and $Y_i$ denote the corresponding block obtained after DCT transformation. The AC components of block $Y_i$, which include all elements except $Y_i[0, 0]$, are then quantized 120 by dividing with the corresponding element from an encoding quantization table $Q$ 140, as follows:

$$Y'_i[u, v] = \left[ \frac{Y_i[u, v]}{Q[u, v]} \right]$$

where [ • ] denotes rounding to the nearest integer. The DC component $Y_i[0,0]$ is handled slightly differently as detailed in Wallace (*ibidem*). The quantized block $Y'_i$ is then entropy coded 130, typically using either a default or user specified Huffman code.

The quantization table used for encoding can be specified by the user and included in the encoded bit stream. However, baseline JPEG allows only a single quantization table to be used for the entire image. Compressing an image that contains blocks with very different characteristics and yet using the same quantization scheme for each block is clearly a sub-optimal strategy. In fact, this is one of the main reasons for the common artifacts seen in reconstructed images obtained after JPEG compression and decompression.

One approach to deal with this artifact problem is to change the "coarseness" of quantization as a function of image characteristics in the block being compressed. In order to alleviate this artifact problem, JPEG Part-3 provides the necessary syntax to allow rescaling of quantization matrix $Q$ on a block by block basis by means of scale factors that can be used to uniformly vary the quantization step sizes on a block by block basis.

The scaling operation is not performed on the DC coefficient $Y[0, 0]$, which is quantized in the same manner as baseline JPEG. The remaining 63 AC coefficients $Y[u, v]$ are quantized as follows:

$$Y''[u, v] = \left[ \frac{Y[u, v] \times 16}{Q[u, v] \times QScale} \right]$$

Where *QScale* is a parameter that can take on values from 1 to 112 (default 16). The decoder needs the value of *QScale* used by the encoding process to correctly recover the quantized AC coefficients. The standard specifies the exact syntax by which the encoder can specify change in *QScale* values. If no such change is signaled then the decoder continues using the *QScale* value that is in current use. The overhead incurred in signaling a change in the scale factor is approximately 15 bits depending on the Huffman table being employed.

It should be noted that the standard only specifies the syntax by means of which the encoding process can signal changes made to the *QScale* value. It does not specify how the encoder can determine if a change in *QScale* is desired or what the new value of *QScale* should be. However, two methods presented below are typical of previous work that has been done towards variable quantization within the JPEG/MPEG framework.

Chun, et. al have proposed a block classification scheme in the context of video coding. (See, K. W. Chun, K. W. Lim, H. D. Cho and J. B. Ra. An adaptive perceptual quantization algorithm for video coding. *IEEE Trans. Consumer Electronics*, 39(3):555-558, 1993.) Their scheme also classifies blocks as being either smooth, edge, or texture, and defines several parameters in the DCT domain as shown below:

| $E_h$: horizontal energy | $E_v$: vertical energy |
|---|---|
| $E_d$: diagonal energy | $E_a$: $avg(E_h, E_v, E_d)$ |
| $E_m$: $min(E_h, E_v, E_d)$ | $E_M$: $max(E_h, E_v, E_d)$ |
| $E_{m/M}$: ratio of $E_m$ and $E_M$ | |

$E_a$ represents the average high frequency energy of the block, and is used to distinguish between low activity blocks and high activity blocks. Low activity (smooth) blocks satisfy the relationship, $E_a \leq T_1$, where $T_1$ is a small constant. High activity blocks are further classified into texture blocks and edge blocks. Texture blocks are detected under the assumption that they have relatively uniform energy distribution in comparison with edge blocks. Specifically, a block is deemed to be a texture block if it satisfies the conditions: $E_a > T_1$, $E_m > T_2$, and $E_{m/M} > T_3$, where $T_1$, $T_2$ and $T_3$ are experimentally determined constants. All blocks which fail to satisfy the smoothness and texture tests are classified as edge blocks.

Tan, Pang and Ngan have developed an algorithm for variable quantization for the H.263 video coding standard. (See, S. H. Tan, K. K. Pang and and K. N. Ngan. Classified perceptual coding with adaptive quantization. *IEEE Trans. Circuits and Systems for Video Tech.*, 6(4):375-388, 1996.) They compute quantization scale factors for a macroblock based on a perceptual classification in the DCT domain. Macroblocks are classified as flat, edge, texture or fine-texture. The classification algorithm first computes the texture energy $T_E$(k) of the *k'th* macro-block to be

$$T_E(k) = \rho \left[ \sum_{\substack{i=0 \\ (i,j) \neq (0,0)}}^{N-1} \sum_{j=0}^{N-1} H^1(i, j)^2 \cdot X[i, j]^2 \right]^{\gamma}$$

where $H^1(f)$ is a weighting function modeling the sensitivity of the Human Visual System (HVS) and $\gamma$ and $\rho$ are constants. After computing the texture energy, macro-block classification is done by a complex process which may often require more than one pass of the data.

Thus, it can be seen that frequency domain-based image compression techniques impose image fidelity limits upon digital image devices, and hinder the use of these devices in many applications.

Therefore, there is an unresolved need for a variable quantization image compression technique that can improve the fidelity of compressed digital images by decreasing the artifacts introduced for a given compression ratio.

A process and apparatus is described to improve the fidelity of compressed images by computing a scaling value for each block based on a perceptual classification performed in the spatial domain. This provides a computationally simple way to reduce artifacts by computing appropriate block-variable scale factors for the quantization tables used in frequency domain-based compression schemes such as the the JPEG compression standard. Because a scale factor for a block is determined based on computations performed in the spatial domain, such computations can be made in parallel with the Discrete Cosine Transform (DCT) computation, thereby providing the same throughput in hardware or parallel processing software as can be obtained by baseline JPEG.

*QScale* values for each block processed by the encoder are computed using the fact that the human visual system is less sensitive to quantization errors in highly active regions of the image. Quantization errors are frequently more perceptible in blocks that are smooth or contain a single dominant edge. Hence, a few simple features for each block are computed prior to quantization. These features are used to classify the block as either synthetic, smooth, edge or texture. A *QScale* value is then computed, and a simple activity measure computed for the block, based on this classification.

One key distinguishing characteristic of the classification scheme is its computational simplicity, facilitating implementation in hardware and software. The calculations require only simple additions, comparisons and shift operations and do not require any floating point operations. The memory requirements are very small. For example, fewer than 256 bytes are needed in addition to the memory requirements of baseline JPEG.

The invention will be readily understood by the following detailed description in conjunction with the accompanying drawings, wherein like reference numerals designate like structural elements, and in which:

Figure 1 is a flow diagram of a typical prior art encoder for a given image block of a digital image;

Figure 2 is a block diagram illustrating an apparatus for processing a digital image using an image compression scheme that practices image compression artifact reduction according to the present invention;

Figure 3 is a flow diagram illustrating an encoder suitable for use in the apparatus of Figure 2; and

Figure 4 is a flow chart illustrating a block classification procedure suitable for use in the encoder of Figure 3.

Embodiments of the invention are discussed below with reference to Figures 1-4. Those skilled in the art will readily appreciate that the detailed description given herein with respect to these figures is for explanatory purposes, however, because the invention extends beyond these limited embodiments.

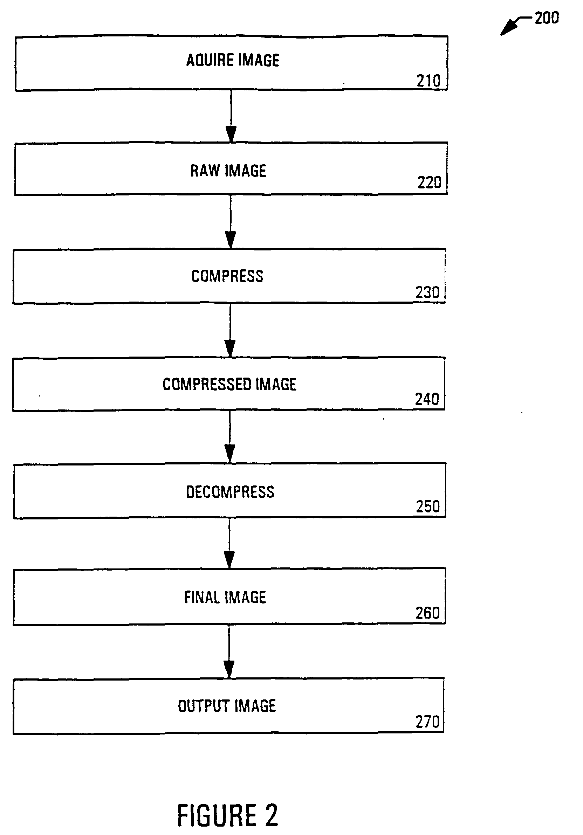

Figure 2 is a block diagram illustrating an apparatus 200 for processing a digital image using an image compression scheme that practices image compression artifact reduction according to the present invention. In Figure 2, a raw digital color or monochrome image 220 is acquired 210. Raw color image 220 typically undergoes space transformation and interpolation (not shown) before being compressed 230, which yields compressed image 240. Final image 260 is then decompressed 250 from compressed image 240 so that final image 260 can be output 270.

Although the following discussion will be made within the context of a digital camera, the image compression artifact reduction scheme can be practiced on any digital image. For example, for alternate embodiments, image acquisition 210 can be performed by a facsimile or scanning apparatus. Similarly, output of final image 270 can be performed by any known image output device, (e.g., a printer or display device). Furthermore, although the following discussion will use a 24-bit digital color image as an example, it is to be understood that images having pixels with other color resolution may be used. Moreover, although the JPEG algorithm will be used in the example, it is to be understood that the image compression artifact reduction scheme can be practiced on any similar compression.

This invention includes a computationally simple way to compute appropriate block-variable scale factors for the quantization tables used in the JPEG compression standard in order to reduce artifacts.

*QScale* values for each block processed by the encoder are computed using the fact that the human visual system is less sensitive to quantization errors in highly active-regions of the image. Quantization errors are frequently more perceptible in blocks that are smooth or contain a single dominant edge. Hence, a few simple features for each block are computed prior to quantization. These features are used to classify the block as either synthetic, smooth, edge or texture. A *QScale* value is then computed based on this classification and a simple activity measure computed for the block.

More details of the technique and specific examples illustrating the potential benefits that can be obtained are presented below.

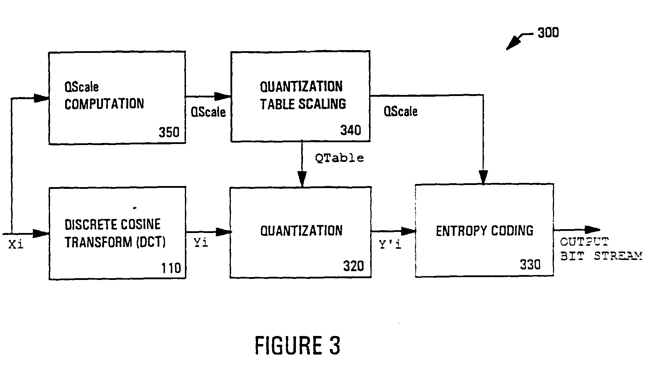

As mentioned before, to obtain the maximum benefit from the JPEG algorithm it is desirable to use a JPEG Part-3 compliant variable quantization image compression technique that can improve the fidelity of compressed digital images by decreasing the artifacts introduced for a given compression ratio. Figure 3 is a flow diagram illustrating a JPEG Part-3 compliant encoder that practices image compression artifact reduction according to the present invention. As such, encoder 300 is suitable for use in the apparatus of Figure 2.

During QScale computation 350, the encoder 300 computes the *QScale* value for each block based on a perceptual classification performed in the spatial domain. During Quantization table scaling 340, the *QScale* value is then used to obtain the quantization table for the given block.

It is important to note that because QScale computation is performed in the spatial domain, operations 350 and 340 can occur concurrently with calculation of the discrete cosine transform 110 of the block. Therefore, as soon as the DCT of the block is calculated, *QTable* will be available for quantization 320 and *QScale* will be available for entropy encoding 330.

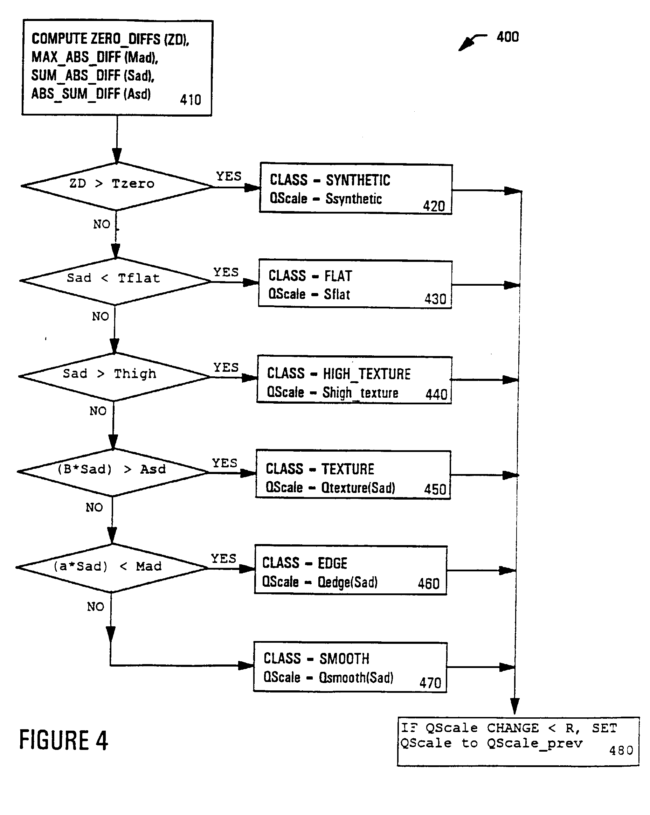

Figure 4 is a flow chart illustrating a block classification procedure 400 suitable for use in the encoder of Figure 3. For the embodiment of Figure 4, $Q_{smooth}$, $Q_{edge}$ and $Q_{texture}$ are look-up tables with 32 entries and $a$, $B$, $R$, $T_{flat}$, $T_{high}$, $T_{zero}$, $S_{flat}$, $S_{synthetic}$ and $S_{high\_texture}$ are constants. As is depicted in 410, the classification employs computation of the following quantities for each 8 x 8 luminance block:

Absolute sum of differences taken along rows and columns.

*Abs-sum-diff*(*Asd*)

$$Asd = |\sum_{i=1}^{8}\sum_{j=1}^{7} (a_{i,j} - a_{i,j+1})| + |\sum_{i=1}^{7}\sum_{j=1}^{8} (a_{i,j} - a_{i+1,j})| \tag{1}$$

Sum of absolute differences taken along rows and columns.
*Sum-abs-diff* (*Sad*)

**4**

$$Sad = \sum_{i=1}^{8}\sum_{j=1}^{7} |a_{i,j}-a_{i,j+1}| + \sum_{i=1}^{7}\sum_{i=1}^{8} |a_{i,j}-a_{i+1,j}| \qquad (2)$$

Number of zero differences along rows and columns.

*Zero-diffs* (*Zd*)

(Note that the == operator denotes a logical operation of value 1 when true and of value 0 when false.)

$$Zd = \sum_{i=1}^{8}\sum_{j=1}^{7} ((a_{i,j}-a_{i,j+1})==0) + \sum_{i=1}^{7}\sum_{j=1}^{8} ((a_{i,j}-a_{i+1,j})==0) \qquad (3)$$

Maximum of the absolute differences along rows and columns.

$$Max\text{-}abs\text{-}diff \ (Mad)$$

$$Mad = Max\{ |a_{i,j}-a_{i,j+1}|_{i=1}^{8} {}_{j=1}^{7} - |a_{i,j}-a_{i+1,j}|_{i=1}^{7} {}_{j=1}^{8} \} \qquad (4)$$

Based on the above each block is classified into one of six categories listed below.

- Flat block

- High Texture block

- Synthetic block

- Edge block

- Smooth block

- Texture block

Referring again to the flow chart of the classification procedure of Figure 4, classification begins by first examining the number of zero differences along rows and columns as computed in Equation 3 above. As depicted in 420, if this value exceeds a threshold the block is considered a synthetic block. For natural images, the presence of noise typically ensures that a majority of adjacent pixels (along rows or columns) do not have identical values. If the block is not synthetic then classification proceeds by examining the sum of the absolute differences taken along rows and columns (*Sad*), computed as in Equation 2 above. As depicted in 430, if the *Sad* value for a block is less than a threshold $T_{flat}$ the block is considered a Flat block. As depicted in 440, if *Sad* is larger than threshold $T_{high\_texture}$, the block is considered High Texture.

If *Sad* lies between $T_{flat}$ and $T_{high\_texture}$, then the algorithm compares *Sad* with the Absolute sum of differences (*Asd*) as computed in Equation 1 above. As depicted in 450, if *Asd* is much smaller than *Sad* then the block is classified as a texture block. In a texture block, differences will oscillate in sign and their sum taken with and without signs will differ greatly.

If the block is not classified as a texture block then the value of the Maximum absolute difference (*Mad*) computed as in Equation 4 above is compared to *Sad*. If the block is an edge block, it will have only a few large differences and the *Mad* value will contribute significantly to *Sad*. Hence, as depicted in 460, if *Mad* is larger than a fixed percentage of *Sad*, the block is deemed an edge block. Otherwise, if this is not the case then the block is considered a smooth block, as depicted in 470.

Finally, as depicted in step 480, if the difference between the new *QScale* value and the *QScale* value for the previous block does not exceed threshold *R*, the *QScale* value is reset to that of the previous block. Note that the final step 480 is an optional step that eliminates the additional overhead introduced to signal a change of QScale value in the case where there is a trivial change.

After having performed the classification, the *QScale* value is computed by means of look up table designed for each class. The *Sad* value for the block is used to index the look-up table. The look-up tables were designed experimentally for each class, by determining the finest quantization levels that resulted in visible artifacts in blocks of different classification and at different activity levels. Although in principle we could compute a scale factor for each of the luminance and chrominance blocks for a color image, in practice we have found that the scale factor computed for a given luminance block can also be used for the corresponding chrominance blocks.

**Advantages of the invention**

In summary, some of the advantages of the invention over prior art are as follows:

- One key distinguishing characteristic of the classification scheme is its computational simplicity, facilitating implementation in hardware and software. The calculations require only simple additions, comparisons and shift operations and do not require any floating point arithmetic.

- The memory requirements are very small. For example, fewer than 256 bytes are needed in addition to the memory requirements of baseline JPEG.

- A scale factor for a block is determined based on computations performed in the spatial domain. Such computations can be made in parallel with the DCT computation, thereby providing the same throughput in hardware as can be obtained by baseline JPEG. This makes it especially suitable for hardware implementation. However, in a parallel processing environment, similar benefit can be obtained in software by performing the DCT transform for one block concurrently with calculating the scale factor for the next block.

- The classification scheme can identify "synthesized" images or regions as opposed to natural images and tailor the scale factor for the block accordingly. Such "synthesized" regions are extremely sensitive to compression and show artifacts very quickly.

- The classification and block-variable qauntization scheme performs well with compound documents composed of text and images. Such images often need to be compressed (e.g., within a printer) and the amount of compression that can be obtained has hitherto been limited by the text part which shows ringing artifacts (or mosquito noise) at moderate compression ratios. Text-block appropriate quantization can be used when text blocks are recognized, whereas more aggressive quantization can be performed in the image part.

The many features and advantages of the invention are apparent from the written description and thus it is intended by the appended claims to cover all such features and advantages of the invention. Further, because numerous modifications and changes will readily occur to those skilled in the art, it is not desired to limit the invention to the exact construction and operation as illustrated and described. Hence, all suitable modifications and equivalents may be resorted to as falling within the scope of the invention.

**Claims**

1. A compression process for a spatial domain digital image having a plurality of blocks, the process comprising the steps of:

   a) classifying a particular block in the spatial domain;
   b) based on the classification of the particular block, obtaining a scale factor for the particular block;
   c) using the scale factor for the particular block, quantizing a frequency domain block associated with the particular block; and
   d) repeating steps a) through c) for at least one other block of the plurality of blocks.

2. The process as set forth in 1, comprising the step of entropy coding the scaled quantized frequency domain blocks resulting in step d).

3. The process as set forth in claim 1, comprising the step of transforming the particular block in the spatial domain of step a) into the asscciated frequency domain block of step c).

4. The process as set forth in claim 3, wherein at least a portion of classification step a) for the particular block is performed concurrently with at least a portion of the step of transformimg the particular block into the associated frequency domain block of step c).

5. The process as set forth in claim 3,wherein at least a portion of step b) for the particular block is performed concurrently with at least a portion of the step of transformimg the particular block into the associated frequency domain block of step c).

6. The process as set forth in claim 3, wherein at least a portion of classification step a) for the other block of step d) is performed prior to completion of at least a portion of the step of quantizing a frequency domain block associated with the particular block.

7. The process as set forth in claim 1, wherein classification step a) classifies the particular block based upon block activity and type.

8. A compression processor for a spatial domain digital image having a plurality of blocks, the processor comprising:

   a block classifier to classify a particular block in the spatial domain;
   a scaler to obtain a scale factor for the particular block based on the classification of the particular block by the block classifier;
   a quantizer to quantize a frequency domain block associated with the particular block using the scale factor for the particular block from the scaler.

9. A digital imaging system, comprising: an image aquirer to acquire a spatial domain digital image having a plurality of blocks; and

   a compression processor for the acquired spatial domain digital image, the compression processor comprising:

   a block classifier to classify a particular block in the spatial domain;
   a scaler to obtain a scale factor for the particular block based on the classification of the particular block by the block classifier; and
   a quantizer to quantize a frequency domain block associated with the particular block using the scale factor for the particular block from the scaler.

10. A digital imaging system, comprising:

   a compression processor to compress a spatial domain digital image having a plurality of blocks into a compressed image; and
   a decompressor to decompress the compressed image;
   wherein the a compression processor comprises:

   a block classifier to classify a particular block in the spatial domain;
   a scaler to obtain a scale factor for the particular block based on the classification of the particular block by the block classifier; and
   a quantizer to quantize a frequency domain block associated with the particular block using the scale factor for the particular block from the scaler.

FIGURE 1
*(Prior Art)*

200

```
┌─────────────────────────────────────────┐
│              AQUIRE IMAGE                 │
│                                      210  │
└─────────────────────────────────────────┘
                    │
                    ▼
┌─────────────────────────────────────────┐
│               RAW IMAGE                   │
│                                      220  │
└─────────────────────────────────────────┘
                    │
                    ▼
┌─────────────────────────────────────────┐
│                COMPRESS                   │
│                                      230  │
└─────────────────────────────────────────┘
                    │
                    ▼
┌─────────────────────────────────────────┐
│            COMPRESSED IMAGE               │
│                                      240  │
└─────────────────────────────────────────┘
                    │
                    ▼
┌─────────────────────────────────────────┐
│               DECOMPRESS                  │
│                                      250  │
└─────────────────────────────────────────┘
                    │
                    ▼
┌─────────────────────────────────────────┐
│               FINAL IMAGE                 │
│                                      260  │
└─────────────────────────────────────────┘
                    │
                    ▼
┌─────────────────────────────────────────┐
│               OUTPUT IMAGE                │
│                                      270  │
└─────────────────────────────────────────┘
```

# FIGURE 2

300

| QScale COMPUTATION | | QUANTIZATION TABLE SCALING |
|---|---|---|
| 350 | QScale | 340 |

QScale

QTable

Xi

| DISCRETE COSINE TRANSFORM (DCT) | | QUANTIZATION | | ENTROPY CODING |
|---|---|---|---|---|
| 110 | Yi | 320 | Y'i | 330 |

OUTPUT
BIT STREAM

# FIGURE 3

COMPUTE ZERO_DIFFS (ZD),
MAX_ABS_DIFF (Mad),
SUM_ABS_DIFF (Sad),
ABS_SUM_DIFF (Asd)          410

400

ZD > Tzero — YES → CLASS = SYNTHETIC / QScale = Ssynthetic          420

NO

Sad < Tflat — YES → CLASS = FLAT / QScale = Sflat          430

NO

Sad > Thigh — YES → CLASS = HIGH_TEXTURE / QScale = Shigh_texture          440

NO

(B*Sad) > Asd — YES → CLASS = TEXTURE / QScale = Qtexture(Sad)          450

NO

(a*Sad) < Mad — YES → CLASS = EDGE / QScale = Qedge(Sad)          460

NO

CLASS = SMOOTH / QScale = Qsmooth(Sad)          470

IF QScale CHANGE < R, SET QScale to QScale_prev          480

**FIGURE 4**